# FASCICULE DE BREVET EUROPEEN

(11) **EP 0 478 402 B1**
(45) Date de publication et mention de la délivrance du brevet: **30.11.1994**
(21) Numéro de dépôt: 91402256.1
(22) Date de dépôt: 19.08.1991
(51) Int. Cl.: B26D 7/06, A23N 15/00

(54) **Dispositif coupe-légumes avec bac de stockage**
Gemüseschneidvorrichtung mit Einlagerungsbehälter
Device for cutting vegetables with storage bin

(30) Priorité: 28.09.1990 FR 9012023
(43) Date de publication de la demande: 01.04.1992
(73) Titulaire: DITO-SAMA, F-23200 Aubusson Creuse (FR)
(72) Inventeur: Musseau, Joel, F-23200 Aubusson (FR)
(74) Mandataire: Moncheny, Michel

(56) Documents cités:
- EP-A- 0 177 748
- AT-B- 326 858
- GB-A- 2 073 839
- GB-A- 2 082 446

## Description

La présente invention a pour objet un dispositif de coupe, notamment de légumes avec bac de stockage.

On connaît de nombreux dispositifs coupe-légumes qui disposent d'une trémie d'alimentation au dessus de laquelle sont disposés des moyens presseurs tandis que l'outil de coupe disposé à l'extrémité inférieure de la trémie tranche les légumes ainsi pressés.

On se reportera par exemple au document GB-A-2 073 839 qui décrit un dispositif conforme au préambule de la revendication 1 et au document EP-A-0 177 784.

Il se trouve que les dispositifs connus ont une capacité de stockage faible et limitée au seul volume de la trémie.

L'utilisateur doit donc transférer des quantités importantes de produit en effectuant de nombreuses manipulations puisque la quantité unitaire est limitée à celle que peut recevoir la trémie.

Par ailleurs, dans l'industrie alimentaire il existe des machines de très gros débit de l'ordre de plusieurs tonnes par heure qui sont susceptibles de traiter en continu un certain type de produits de façon totalement automatique.

Par contre, il existe un marché pour des dispositifs coupe-légumes susceptibles de traiter des débits importants de produits de l'ordre de quelques centaines de kilogrammes par heure or ces débits ne peuvent pas être obtenus à l'aide de petits dispositifs semi-automatiques ayant une trémie capable de recevoir un ou deux kilogrammes à chaque charge, de tels débits ne pouvant pas non plus être obtenus par une chaîne industrielle spécifique.

En effet, il est nécessaire que de tels dispositifs puissent traiter différents types de légumes et rester suffisamment souples et adaptables pour être applicables à tout type de légumes avec une gamme étendue d'outils de coupe.

D'autres impératifs sont également dictés par les utilisateurs, notamment un stockage intermédiaire important, un système de fouloir, le tout étant démontable pour le nettoyage, un accès facile à l'outil de coupe en vue de son changement, un pilon nécessaire à certaines applications, le dispositif devant être compact et ergonomique, fiable et devant présenter toutes les garanties de sécurité.

A cet effet, le dispositif coupe-légumes selon l'invention comprend un bac de stockage, une motorisation entraînant un outil de coupe, une évacuation, ainsi que des moyens d'alimentation en légumes de l'outil de coupe, et est caractérisé en ce que ces moyens d'alimentation en légumes comprennent une trémie, avec de moyens de pressage des légumes mobiles verticalement dans la trémie et mobiles en rotation autour d'un axe vertical, une rampe interposée entre le bac et ladite trémie ainsi que des moyens d'obturation de la rampe comprenant un volet solidaire de ces moyens d'obturation qui coopère avec le bac et avec la rampe pour interdire la sortie des produits du bac lorsque les moyens de pressage sont au droit de la trémie et en ce que les moyens d'obturation sont fixés sur ces moyens de pressage.

Le dispositif selon l'invention se caractérise également en ce que les moyens de pressage, la trémie et la rampe sont portés par une embase, elle-même mobile par rapport à un socle supportant la motorisation, l'outil de coupe et l'évacuation ainsi que le bac de stockage.

Les moyens de pressage du dispositif selon l'invention comprennent notamment un fouloir manoeuvrable par un levier muni de deux patins latéraux de guidage dans la trémie.

Selon une autre caractéristique particulière de l'invention le levier du fouloir est équilibré par des ressorts de compensation de façon que le fouloir soit stable dans ses positions haute et basse. Ce fouloir comprend également un pilon intégré qui coulisse dans un logement ménagé à même le fouloir et des moyens de blocage du pilon par rapport au fouloir.

Selon un mode de réalisation particulier, la rampe est également munie de deux nervures de guidage des écoulements liquides du bac de stockage vers la trémie. Un joint en caoutchouc, disposé entre le bac de stockage et l'embase assure l'étanchéité.

En ce qui concerne la sécurité, le dispositif selon l'invention se caractérise en ce qu'il comprend un contact électrique de sécurité à déclenchement magnétique dont une partie est solidaire du socle et l'autre des moyens de pressage de façon à être ouvert lors du déplacement en rotation des moyens de pressage et lors du relevage de l'embase par rapport au socle ou lors du retrait des moyens de pressage.

La présente invention est décrite ci-après selon un mode de réalisation particulier en regard des dessins annexés sur lesquels :
- la figure 1 représente une vue en élévation latérale du dispositif coupe-légumes selon l'invention, et
- la figure 2 représente une vue de dessus de ce même dispositif.

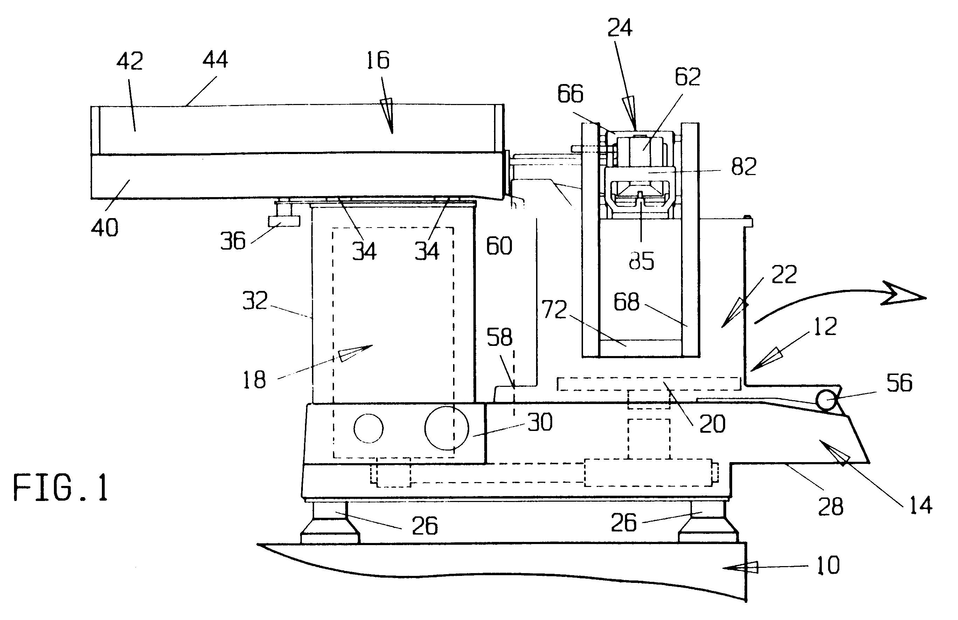

Sur la figure 1, on a représenté un support 10 sur lequel repose le dispositif coupe-légumes 12 selon l'invention.

Le support 10 peut être avantageusement une table déplaçable liée au dispositif 12 par des moyens connus.

Le dispositif coupe-légumes comprend un socle 14, un bac de stockage 16, une motorisation 18, un outil de coupe 20, une embase 22 et des moyens de pressage 24.

Le socle 14 comprend des pieds 26 assurant la stabilité du dispositif coupe-légumes. Le socle comprend également une évacuation 28 à travers laquelle sont éjectés les légumes coupés par l'outil de coupe 20, monté à rotation à l'intérieur même dudit socle 14 et entraîné par la motorisation 18.

Ce type d'outil de coupe et d'entraînement est connu de l'homme de l'art et le montage a été schématiquement représenté en traits discontinus sur la figure. De tels moyens de coupe comprennent généralement une platine sur laquelle est fixée l'outil de coupe proprement dit, la platine est entraînée par une courroie, elle-même mise en rotation par le moteur électrique.

La mise en marche et l'arrêt peuvent être pilotés au moyen d'un tableau de commande frontal 30, représenté de façon schématique, sur cette figure 1.

Les moyens de motorisation comprennent un moteur électrique ainsi que cela vient d'être décrit entouré d'un carter 32 solidaire du socle 14 et supportant le bac de stockage 16. Ce bac de stockage est fixé de façon amovible à la partie supérieure du carter 18 grâce à des pions 34 et à un boulon de serrage 36.

Le bac de stockage 16 comprend un fond 38 et des bords relevés 40, sur toute la périphérie, l'un au moins des côtés 42 étant muni d'une surélévation 44.

Le bac comprend également une ouverture 46.

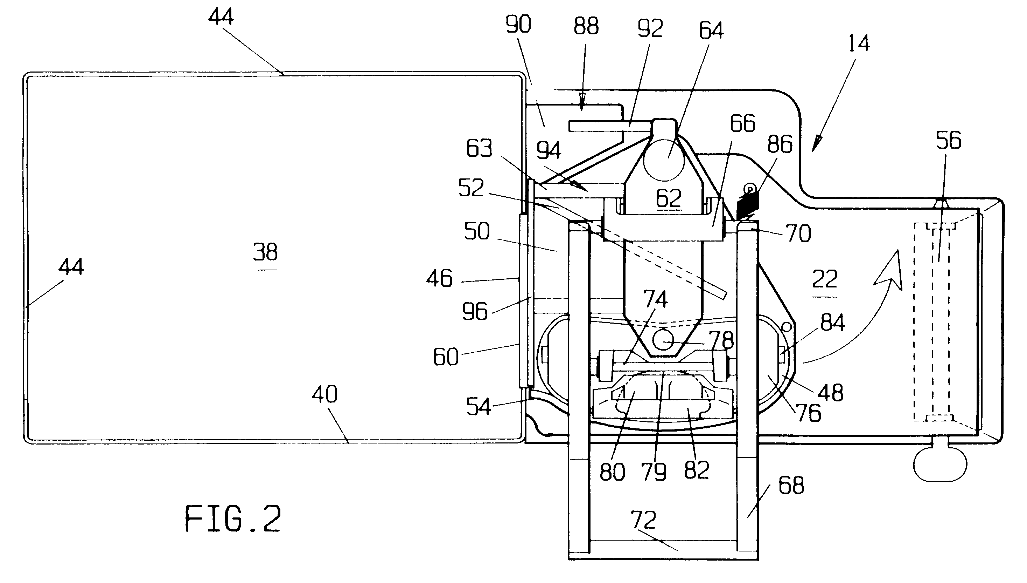

L'embase 22 comprend ainsi que cela est mieux représenté sur la figure 2, une trémie d'alimentation 48, une rampe 50 interposée entre cette trémie 48 et le bac de stockage 16. Cette rampe est en fait constituée de la surface supérieure de l'embase 22 et cette rampe comprend une première nervure 52, disposée à l'arrière de la rampe et une nervure 54 disposée à l'avant de façon à assurer un guidage convergeant vers la trémie 48.

L'embase 22 est déplaçable par rotation dans le plan vertical autour d'un axe 56 interposé entre le socle 14 et ladite embase. Les moyens de fermeture 58 sont schématisés sur la figure 1, ils évitent tout mouvement de l'embase par rapport au socle lorsque ces moyens de fermeture sont verrouillés.

En ce qui concerne l'étanchéité il est prévu un joint souple 60, solidaire de l'embase 22 et interposé entre cette embase et le bac de stockage. Le joint est solidaire de l'embase.

Les moyens de pressage 24 comprennent une platine 62, montée à rotation autour de l'axe 64, solidaire de l'embase 22. Sur cette platine 62, il est prévu un étrier 66, articulé sur cette platine 62, cet étrier recevant les extrémités d'un levier de manoeuvre 68, monté à rotation autour de deux demi-axes 70.

Le levier de manoeuvre 68 comporte à son extrémité libre une poignée 72, ainsi qu'un axe 74 destiné à supporter le fouloir 76.

Le fouloir 76 est guidé par rapport à la platine 62 par un axe 78 vertical et parallèle à l'axe 64. Le fouloir 76 a un profil tel qu'il lui permet de coopérer avec la trémie 48 ménagée dans l'embase 22.

Ce fouloir 76 comprend un logement 79 qui reçoit un pilon 80 manoeuvrable manuellement à l'aide d'une poignée 82, tandis que des moyens de blocage 85, représentés sur la figure 1, permettent de solidariser le pilon avec le fouloir.

Le fouloir 76 est en outre muni de butées 84 latérales permettant d'éviter tout contact direct entre le fouloir 76 et la paroi interne de la trémie 48. Des moyens de rappel sous forme de ressorts 86 sont prévus à l'arrière du levier de manoeuvre 68 de façon à compenser les efforts et de façon que ce levier de manoeuvre 68 soit stable dans les positions haute et basse.

A l'arrière du dispositif coupe-légumes, il est prévu un contact électrique de sécurité 88, de type magnétique, une partie fixe 90 étant solidaire du socle 14 tandis que l'autre partie 92 mobile est solidaire de la platine 62.

Le dispositif coupe-légumes est également complété par des moyens d'obturation 94 du passage 46 ménagé dans le bac de stockage comprenant un volet 96 fixé sur la platine 62 par des bras 63, volet qui coopère avec le bac et avec la rampe pour interdire la sortie des produits du bac lorsque les moyens de pressage sont dans la position représentée aux figures 1 et 2, à savoir quand le fouloir 76 est au droit de la trémie 48 et que l'embase 22 est verrouillée sur le socle 14 par les moyens de fermeture 58.

Le fonctionnement du dispositif coupe-légumes selon l'invention est décrit ci-après.

Le bac 16 est disposé sur l'appareil coupe-légumes pour autant qu'il ne soit pas déjà en place, le verrouillage s'effectuant à l'aide du boulon 36. L'utilisateur déverse alors dans le bac de stockage 16 la quantité de légumes qu'il souhaite traiter. Le remplissage du bac de stockage 16 est facilité par les surélévations 44 périphériques.

Le levier de manoeuvre 68 est alors déplacé vers le haut de façon que le fouloir 76 vienne à l'extérieur de la trémie 48 au-dessus de l'embase 22, puis toujours à l'aide de ce levier de manoeuvre 68, l'utilisateur exerce un effort pour mettre en rotation la platine 62 autour de l'axe 64 suivant la flèche représentée sur la figure 2.

Simultanément à cette rotation le moteur s'arrête grâce au contact électrique de sécurité décrit ci-avant le volet 96 des moyens d'obturation 94 s'écarte de l'ouverture 46 du bac de stockage ce qui permet l'écoulement des légumes vers la trémie 48. Le joint 60 assure l'étanchéité entre l'embase 22 et le fond 38 du bac 16 si bien que les légumes et le liquide contenus dans le bac s'écoulent sur la rampe 50 entre les nervures 52 et 54 vers ladite trémie 48.

Lorsque la trémie 48 est remplie, l'utilisateur manoeuvre le levier 68 à l'aide de la poignée 72 dans le sens inverse de la flèche représentée à la figure 2 pour amener le fouloir 76 au droit de la trémie 48. Simultanément, le volet 96 assure la fermeture du bac de stockage. Par contre, lorsque les moyens de pressage 24 sont déplacés en rotation, le volet 96 est à l'aplomb du rail 52 arrière de façon à guider les légumes venant du bac vers la trémie. De plus, le contacteur 88 est fermé puisque la partie mobile 92 est immédiatement au dessus de la partie fixe 90, si bien que le tableau de commande 30 peut être actionné par l'utilisateur ou que le moteur peut se mettre en marche automatiquement en entraînant l'outil de coupe.

Lorsque celui-ci met en route la motorisation 18, il met également en route l'outil de coupe 20 qui assure la découpe des légumes tandis que l'utilisateur en exerçant une traction du haut vers le bas sur la poignée 72 du levier de manoeuvre 68 exerce une pression adaptée au travail à l'aide du fouloir 76 sur les légumes contenus dans la trémie 48. Ceux-ci, une fois découpés par l'outil de coupe 20, sont éjectés par l'évacuation 28 dans un bac, non représenté, destiné à les recevoir.

L'opération est ainsi effectuée jusqu'à ce que l'ensemble du bac de stockage soit vide.

On remarque que l'utilisateur n'effectue qu'un mouvement simple de monte et baisse et de rotation d'une main tandis qu'il peut assurer le remplissage de la trémie de l'autre main.

Lorsque l'ensemble des légumes est traité, l'utilisateur peut nettoyer le dispositif ou bien changer l'outil de coupe du dispositif coupe-légumes selon l'invention.

Dans ce cas, il déverrouille l'embase 22 en manoeuvrant les moyens de fermeture 58 pour permettre le basculement de l'embase 22 surmontée des moyens de pressage 24 autour de l'axe 56 suivant la flèche représentée sur la figure 1.

L'utilisateur a donc accès directement à l'outil qu'il peut changer ou nettoyer.

La sécurité lors de cette manoeuvre est également respectée puisque la partie mobile 92 du contacteur 88 est éloignée de la partie fixe 90 ce qui assure la fonction coupe-circuit.

Les moyens d'obturation 94 ainsi que le joint 60 se sont déplacés avec l'embase ce qui permet également de rincer de façon très simple l'intérieur du bac et de récupérer les écoulements dans un récipient rapporté. Une fois cette opération de nettoyage terminée, l'utilisateur ramène l'embase 22 dans sa position initiale sur le socle 14 et verrouille les moyens de fermeture 58.

Le nettoyage des moyens de pressage s'effectue indépendamment du reste de la machine, puisque la platine 62 peut être démontée de l'axe 64 de façon très simple, il suffit de retirer la platine 62 de cet axe 64 puisque cette platine supporte l'ensemble des éléments de pressage. La sécurité est là encore respectée puisque la partie mobile 92 du contact électrique de sécurité est également retirée.

Dans le cas où l'utilisateur souhaite travailler avec le pilon il introduit les légumes manuellement dans le logement 79 à la place du pilon préalablement désolidarisé et retiré, puis il utilise le pilon pour accompagner les légumes.

Un tel dispositif coupe-légumes est simple, peu onéreux, se situe dans une gamme moyenne quant aux quantités de produit traitées.

Ce dispositif est fiable, simple d'entretien et d'une grande compacité.

En ce qui concerne le joint souple du dispositif il a un double rôle, celui d'étanchéité mais il permet aussi d'éviter toute blessure de l'utilisateur par coincement lors des manoeuvres de l'embase, ce qui améliore encore la sécurité.

Le dispositif selon l'invention est également très ergonomique car il permet à l'utilisateur de travailler debout en évitant qu'il se courbe pour remplir la trémie. Il lui suffit de remplir le bac de stockage une fois puis de charger plusieurs fois la trémie à partir du bac ce qui est une opération aisée. En fonction de la quantité à traiter, il remplira éventuellement plusieurs fois le bac. Le dispositif selon l'invention permet donc de limiter les mouvements pénibles habituellement nécessaires.

## Revendications

1. Dispositif coupe-légumes comprenant un bac de stockage (16), une motorisation (18) entraînant un outil de coupe (20), une évacuation (28), ainsi que des moyens d'alimentation en légumes de l'outil de coupe, caractérisé en ce que ces moyens d'alimentation en légumes comprennent une trémie (48), avec des moyens de pressage (24) des légumes mobiles verticalement dans la trémie et mobiles en rotation autour d'un axe (64) vertical, une rampe (50) interposée entre le bac (16) et ladite trémie ainsi que des moyens d'obturation (94) de la rampe (50) comprenant un volet (96) solidaire de ces moyens d'obturation (94) qui coopère avec le bac (16) et avec la rampe (50) pour interdire la sortie des produits du bac lorsque les moyens de pressage (24) sont au droit de la trémie (48) et en ce que les moyens d'obturation (94) sont fixés sur ces moyens de pressage.

2. Dispositif selon la revendication 1, caractérisé en ce que les moyens de pressage (24) ont un débattement angulaire tel qu'ils assurent un quidage de l'écoulement des légumes du bac de stockage vers la trémie.

3. Dispositif selon la revendication 1 ou 2, caractérisé en ce que les moyens de pressage (24), la trémie (48) et la rampe (50) étant portés par une embase (22), elle-même mobile par rapport à un socle (14) supportant la motorisation (18) l'outil de coupe (20) et son évacuation (28) ainsi que le bac de stockage (16), il comprend un contact électrique de sécurité (88) dont une partie (90) est solidaire du socle et l'autre partie (92) mobile est solidaire des moyens de pressage de façon que la motorisation soit arrêtée lorsque l'embase ou les moyens de pressage sont déplacés en rotation ou lorsque les moyens de pressage sont retirés.

4. Dispositif selon l'une quelconque des revendications précédentes, caractérisé en ce que les moyens de pressage (24) comprennent un fouloir (76) manoeuvrable par un levier de manoeuvre (68), ce fouloir étant muni de deux patins latéraux (84) de guidage dans la trémie (48) et d'un pilon (80) intégré coulissant dans un logement (78) ménagé dans le fouloir et des moyens de blocage (85) du pilon par rapport au fouloir.

5. Dispositif selon l'une quelconque des revendications précédentes, caractérisé en ce que les moyens de pressage sont équilibrés par des moyens de rappel (86) de façon que le fouloir (76) soit stable dans les positions haute et basse.

6. Dispositif selon l'une quelconque des revendications précédentes, caractérisé en ce que la rampe (50) comprend deux nervures avant (54) et arrière (52) de guidage des écoulements liquides du bac vers la trémie (48).

7. Dispositif selon la revendication 6, caractérisé en ce que la nervure (52) arrière est à l'aplomb du volet (96) des moyens d'obturation lorsque les moyens de pressage (24) ont été déplacés en rotation pour dégager l'accès à la trémie.

8. Dispositif selon l'une quelconque des revendications précédentes, caractérisé en ce qu'il comprend un joint souple (60) interposé entre le bac de stockage et l'embase, ce joint étant solidaire de l'embase.

## Claims

1. Vegetable cutting device comprising a storage tray (16), a motor (18) driving a cutting tool (20), a discharge (28), and means for feeding vegetables to the cutting tool, characterised in that these vegetable feed means comprise a hopper (48), with means (24) for pressing movable vegetables vertically into the hopper which are able to move in rotation about a vertical axis (64), a slope (50) interposed between the tray (16) and the said hopper as well as means (94) for closing off the slope (50) comprising a flap (96) integral with these closing-off means (94) which cooperates with the tray (16) and with the slope (50) to prevent products leaving the tray when the pressing means (24) are in line with the hopper (48) and in that the closing-off means (94) are fixed to these pressing means.

2. Device according to Claim 1, characterised in that the pressing means (24) have an angular movement such that they provide a guiding of the flow of vegetables from the storage tray to the hopper.

3. Device according to Claim 1 or 2, characterised in that the pressing means (24), the hopper (48) and the slope (50) being carried by a support (22), itself able to move with respect to a base (14) supporting the motor (18), the cutting tool (20) and its discharge (28) as well as the storage tray (16), it comprises an electrical safety contact (88), one part (90) of which is fixed to the base and the other, movable part (92) of which is fixed to the pressing means so that the motor is stopped when the support or the pressing means are moved in rotation or when the pressing means are withdrawn.

4. Device according to any one of the preceding claims, characterised in that the pressing means (24) comprise a ram (76) which can be operated by means of an operating lever (68), this ram being provided with two lateral shoes (34) for guiding in the hopper (48) and an integral pusher (80) sliding in a housing (78) provided in the ram and means (85) for locking the pusher with respect to the ram.

5. Device according to any one of the preceding claims, characterised in that the pressing means are balanced by return means (86) so that the ram (76) is stable in the top and bottom positions.

6. Device according to any one of the preceding claims, characterised in that the slope (50) comprises two front (54) and rear (52) ribs for guiding liquid flows from the tray towards the hopper (48).

7. Device according to Claim 6, characterised in that the rear rib (52) is directly above the flap (96) of the closing-off means when the pressing means (24) have been moved in rotation in order to leave access to the hopper clear.

8. Device according to any one of the preceding claims, characterised in that it comprises a flexible joint (60) interposed between the storage tray and the support, this joint being integral with the support.

## Patentansprüche

1. Gemüseschneidvorrichtung mit einem Einlagerungsbehälter (16), einer Motorisierung (18) zum Antreiben eines Schneidwerkzeugs (20), einem Auswurf (28) und Einrichtungen zum Zuführen von Gemüsen zu dem Schneidwerkzeug, dadurch **gekennzeichnet**, daß die Zufuhreinrichtungen für Gemüse einen Zufuhrschacht (48) mit Druckeinrichtungen (24) für Gemüse umfassen, die senkrecht In dem Zufuhrschacht beweglich und um eine senkrechte Achse (64) schwenkbar sind, ferner eine Rampe (50) zwischen dem Behälter (16) und dem Zufuhrschacht sowie Sperreinrichtungen (94) für die Rampe (50), die eine mit den Sperreinrichtungen (94) fest verbundene Klappe (96) umfassen, die mit dem Behälter (16) zusammenwirken zur Blockierung des Austritts der Produkte aus dem Behälter, wenn die Druckeinrichtungen (24) über dem Zufuhrschacht (48) liegen, und daß die Sperreinrichtungen (94) an den Druckeinrichtungen befestigt sind.

2. Vorrichtung nach Anspruch 1, dadurch **gekennzeichnet**, daß die Druckeinrichtungen (24) einen Schwenkweg aufweisen, bei dem eine Führung des Gemüsestroms vom Einlagerungsbehälter zum Führungsschacht gewährleistet ist.

3. Vorrichtung nach Anspruch 1 oder 2, dadurch **gekennzeichnet**, daß die Druckeinrichtungen (24), der Führungsschacht (48) und die Rampe (50) getragen werden durch ein Unterteil (22), das seinerseits in bezug auf einen Sockel (14) beweglich ist, der die Motorisierung (18), das Schneidwerkzeug (20) und dessen Auswurf (28) sowie den Einlagerungsbehälter (16) trägt, daß es einen elektrischen Sicherheitskontakt (88) aufweist, dessen eines Teil (90) mit dem Sockel und dessen anderes, bewegliches Teil (92) mit den Druckeinrichtungen derart verbunden ist, daß die Motorisierung angehalten wird, wenn das Unterteil oder die Druckeinrichtungen in Schwenkrichtung versetzt oder die Druckeinrichtungen zurückgezogen sind.

4. Vorrichtung nach einem der vorhergehenden Ansprüche, dadurch **gekennzeichnet**, daß die Druckeinrichtungen (24) einen Stempel (76) umfassen, der durch einen Betätigungshebel (68) bewegbar ist, welcher Stempel zwei seitliche Führungsansätze (84) zur Führung in dem Zufuhrschacht (48) und einen Stößel (80), der gleitend in einer Aufnahme (78) in dem Stempel angeordnet ist, und eine Blockierungseinrichtung (85) für den Stößel in bezug auf den Stempel umaßt.

5. Vorrichtung nach einem der vorhergehenden Ansprüche, dadurch **gekennzeichnet**, daß die Druckeinrichtungen durch Rückholeinrichtungen (86) ausbalanciert sind, derart, daß der Stempel (76) in der oberen und unteren Position in stabiler Lage ist.

6. Vorrichtung nach einem der vorhergehenden Ansprüche, dadurch **gekennzeichnet**, daß die Rampe (50) zwei vordere und hintere Führungsrippen (54,52) zum Führen von Flüssigkeitsströmen vom Behälter zum Zufuhrschacht (48) aufweist.

7. Vorrichtung nach Anspruch 6, dadurch **gekennzeichnet**, daß die hintere Führungsrippe (52) senkrecht zur Sperrklappe (96) der Sperreinrichtungen steht, wenn die Druckeinrichtungen (24) zur Freigabe des Zugangs zum Zufuhrschacht geschwenkt sind.

8. Vorrichtung nach einem der vorhergehenden Ansprüche, dadurch **gekennzeichnet**, daß sie eine nachgiebige Verbindung (60) zwischen dem Einlagerungsbehälter und dem Unterteil umfaßt, die fest mit dem Unterteil verbunden ist.
